(19) **Europäisches Patentamt / European Patent Office / Office européen des brevets**

(11) **EP 4 557 445 A1**

(12) **EUROPEAN PATENT APPLICATION**
published in accordance with Art. 153(4) EPC

(43) Date of publication:
**21.05.2025 Bulletin 2025/21**

(21) Application number: **23838932.4**

(22) Date of filing: **11.07.2023**

(51) International Patent Classification (IPC):
**H01M 10/42** *(2006.01)*     **H01M 4/36** *(2006.01)*
**H01M 4/62** *(2006.01)*     **H01M 4/13** *(2010.01)*
**H01M 10/0525** *(2010.01)*

(52) Cooperative Patent Classification (CPC):
Y02E 60/10

(86) International application number:
**PCT/CN2023/106750**

(87) International publication number:
**WO 2024/012441 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.07.2022 CN 202210813802**

(71) Applicant: **Shenzhen Innovazone Technology Co., Ltd.**
**Shenzhen, Guangdong 518000 (CN)**

(72) Inventors:
• **YU, Yonglong**
**Shenzhen, Guangdong 518000 (CN)**

• **WAN, Yuanxin**
**Shenzhen, Guangdong 518000 (CN)**
• **KONG, Lingyong**
**Shenzhen, Guangdong 518000 (CN)**
• **ZHONG, Zeqin**
**Shenzhen, Guangdong 518000 (CN)**
• **ZHONG, Wen**
**Shenzhen, Guangdong 518000 (CN)**
• **TAN, Qiqing**
**Shenzhen, Guangdong 518000 (CN)**

(74) Representative: **Laine IP Oy**
**Porkkalankatu 24**
**00180 Helsinki (FI)**

(54) **LITHIUM SUPPLEMENTING ADDITIVE FOR POSITIVE ELECTRODE, AND PREPARATION METHOD THEREFOR AND USE THEREOF**

(57)     A cathode lithium-supplementing additive used in the technical field of battery technology and a preparation method thereof. A cathode lithium-supplementing additive is provided, the cathode lithium-supplementing additive includes: a lithium-containing material, and a doped phase existing in a bulk phase of the lithium-containing material. A water absorption rate of the cathode lithium-supplementing additive is 0 ppm/s to 50 ppm/s. The lithium-containing material containing the doped phase having a water absorption rate of 0 ppm/s to 50 ppm/s is selected as the cathode lithium-supplementing additive, ensuring that the obtained cathode lithium-supplementing additive has good moisture resistance, and ensuring that the doping effect of the doped phase is good, so that the obtained battery has excellent properties and the entire battery will not be scrapped.

EP 4 557 445 A1

## Description

This application claims the priority of the Chinese patent application submitted to the CNIPA on Jul. 12, 2022, with an application number 202210813802.9 and titled "CATHODE LITHIUM-SUPPLEMENTING ADDITIVE, PREPARATION METHOD THEREOF, AND APPLICATION THEREOF", the entire contents of which are incorporated by reference in this application.

## TECHNICAL FIELD

The present application relates to the technical field of battery technology, more particularly to a cathode lithium-supplementing additive, preparation method thereof, and application thereof.

## BACKGROUND

Lithium-ion battery is a secondary battery (rechargeable battery), which works mainly relying on the movement of lithium ions between the cathode and the anode. During the charging and discharging process, $Li^+$ is intercalated and de-intercalated back and forth between the two electrodes. When charging, $Li^+$ is de-intercalated from the cathode, passing through the electrolyte, and is intercalated in the anode, and the anode is in a lithium-rich state; and vice versa when discharging. Lithium-ion batteries pursue high energy density, and increasing capacity is one of the methods to increase energy density.

The common problem of lithium-ion batteries at present is that a large amount of lithium ions released from the cathode will be consumed during the initial charge form a solid electrolyte interface (SEI) film on the anode surface. The irreversible consumption of the cathode lithium source in the initial charge exceeds 10%, and the initial Columbic efficiency is less than 90%. Secondly, lithium-ion batteries continue to consume active lithium during normal use. The above leads to a decrease in the initial capacity of the battery cell and a decrease in the battery life. Therefore, at this stage, a lot of cathode lithium-supplementing additive materials are provided to be mixed with cathode materials to assemble batteries.

In batteries using cathode lithium-supplementing additives, whether the battery meets the requirements can only be known after assemblage of the existing batteries. It is mainly reflected in the fact that the lithium-supplementing material is easy to absorb moisture during use, making the battery have poor moisture resistance, resulting in battery scrapping. However, this degradation can only be known after the battery is made, which will cause the entire battery to be scrapped, resulting in problems of increase in battery scrapping, and it is currently difficult to measure the water absorption rate to determine the state of doping without assembling into a battery.

## TECHNICAL PROBLEMS

It is an objective of the present application to provide a cathode lithium-supplementing additive, a preparation method thereof, and an application thereof, which aims to solve the problem that the water absorption rate of the lithium-supplementing material cannot be measured to determine the state of doping without assembling into a battery in the prior art.

## TECHNICAL SOLUTIONS

To achieve the above objective of the present application, the following technical solutions are adopted by the present application:

In a first aspect, a cathode lithium-supplementing additive is provided by the present application. The cathode lithium-supplementing additive comprises: a lithium-containing material, and a doped phase existing in a bulk phase of the lithium-containing material. A water absorption rate of the cathode lithium-supplementing additive is 0 ppm/s to 50 ppm/s.

The cathode lithium-supplementing additive provided by the present application comprises the lithium-containing material and the doped phase existing in the bulk phase of the lithium-containing material. After the lithium-containing material containing the doped phase is prepared, the water absorption rate is tested, and the lithium-containing material containing the doped phase having the water absorption rate of 0 ppm/s to 50 ppm/s is selected as the cathode lithium-supplementing additive, ensuring that the obtained cathode lithium-supplementing additive has good moisture resistance and good doping effect of the doped phase, so that the obtained battery has excellent properties and the entire battery will not be scrapped.

In some embodiments, a doping element in the doped phase comprises at least one element of Al, Zr, Si, C, Co, Ni, Ti, Mn, and Cu.

In some embodiments, a covalent bond containing the doping element exists inside the lithium-containing material.

In some embodiments, a content of the doping element in the doped phase accounts for 1% to 10% of the cathode lithium-supplementing additive.

In some embodiments, the lithium-containing material comprises at least one of $Li_xM_yO_z$ and $Li_wA$; in which, $0<x\leq8$, $0<y\leq3$, $0<z<6$, $0<w\leq5$; M is at least one element of Fe, Co, Ni, Mn, Si, Sn, Cu, Mo, Al, and Ti; and A is at least one element of C, N, O, P, S, F, B, and Se.

In a second aspect, a preparation method of a cathode lithium-supplementing additive is provided by the present application. The preparation method comprises the following steps:

providing a lithium-containing material containing a doped phase;

measuring a mass of the lithium-containing material containing the doped phase at different time points within 0 min to 60 min, and calculating a water absorption rate of the lithium-containing material containing the doped phase; and

selecting the lithium-containing material containing the doped phase having a water absorption rate of 0 ppm/s to 50 ppm/s as the cathode lithium-supplementing additive.

In the preparation method of the cathode lithium-supplementing additive provided by the present application, the mass of the lithium-containing material containing the doped phase at different time points within 0 min to 60 min is measured, the water absorption rate of the lithium-containing material containing the doped phase is calculated, and the lithium-containing material containing the doped phase with a water absorption rate of 0 ppm/s to 50 ppm/s is further selected as the cathode lithium-supplementing additive. In the preparation method, the water absorption rate of the cathode lithium-supplementing additive material can be measured for the lithium-containing material containing the doped phase without being assembled to form a battery, so as to determine the doping state of the doped phase, and ensure that the obtained cathode lithium-supplementing additive has good moisture resistance. After the cathode lithium-supplementing additive is assembled and packaged to form the battery, due that the bulk phase is doped by the doping element, the proportion of the lithium-supplementing additive material that is prone to moisture absorption reaction is reduced, and the doping elements can reduce the activity of the lithium-supplementing additive material, the stability of the lithium-supplementing additive material in the outdoor environment atmosphere increases. In addition, the activity of the lithium-supplementing additive material during charging and discharging can also be improved, thereby ensuring that the entire battery will not be scrapped and the battery life is improved.

In some embodiments, in the step of calculating the water absorption rate of the lithium-containing material containing the doped phase, environmental conditions for measuring the lithium-containing material are controlled to be as follows: a standard atmospheric pressure, a temperature of 23°C to 27°C, and a relative humidity controlled to be between 10% and 50%.

In some embodiments, a variation range of the relative humidity is smaller than 5%.

In some embodiments, the relative humidity is selected from a range of 20% to 25% or a range of 30% to 35%.

In some embodiments, in the step of calculating the water absorption rate of the lithium-containing material containing the doped phase, the mass of the lithium-containing material containing the doped phase is 0.1 g to 1 g.

In some embodiments, in the step of calculating the water absorption rate of the lithium-containing material containing the doped phase, the lithium-containing material containing the doped phase is loosely laid flat, and a laying thickness is 0.01 cm to 0.3 cm.

In some embodiments, the step of measuring the mass at different time points within 0 min to 60 min comprises: measuring the mass every 5 min within 0 min to 60 min.

In some embodiments, in the step of calculating the water absorption rate of the lithium-containing material containing the doped phase, a calculation formula of the water absorption rate is:

$$V=(w_{t2}-w_{t1})/w_0*(t2-t1)$$

in which, $w_0$ is a mass of a sample added, $w_{t1}$ is a mass of the sample after a placement time t1, $w_{t2}$ is a mass of the sample after a placement time t2, and t1 and t2 are placement times.

In a third aspect, a cathode plate is provided by the present application. The cathode plate comprises the cathode lithium-supplementing additive provided by the present application, or the cathode lithium-supplementing additive prepared by the preparation method of the cathode lithium-supplementing additive provided by the present application.

The cathode plate of the present application comprises the cathode lithium-supplementing additive of the present application. Based on the provided cathode lithium-supplementing additive having the water absorption rate limited to 0 ppm/s to 50 ppm/s, the cathode plate has good moisture resistance, can isolate harmful components such as water and carbon dioxide in the air and has certain conductivity. After being assembled to form the battery, the cathode plate can achieve the effect of lithium-supplementing for the cathode of the battery, improve the service life of the battery, maintain the abundance of lithium ions in the battery system, improve the initial Columbic efficiency and overall electrochemical performance of the battery, and achieve efficient lithium-supplementing.

In a fourth aspect, a secondary battery is provided by the present application. The secondary battery comprises the cathode plate provided by the present application.

The secondary battery of the present application comprises the cathode plate provided by the present application. The cathode plate comprises the cathode lithium-supplementing additive prepared by the preparation method of the cathode lithium-supplementing additive, ensuring that before packaging to form the secondary battery, the cathode lithium-supplementing additive in the cathode plate has good moisture resistance and is not affected by water vapor and carbon dioxide in the air, so that the lithium ions in the assembled secondary battery system are stable, the overall electrochemical performance of the battery is improved, making the battery have good cycle performance and lithium-supplementing performance, which is conducive to widespread use.

## DETAILED DESCRIPTION OF THE EMBODIMENTS

In order to make the technical problems, technical solutions, and beneficial effects to be solved in the present application clearer, the present application will be further described in detail below in conjunction with the embodiments. It should be understood that the specific embodiments described here are only used to explain the present application, but are not intended to limit the present application.

In the present application, the term "and/or" describes the association relationship of associated objects, indicating that there may be three relationships, for example, A and/or B, which may mean the following conditions: A exists alone, A and B exist simultaneously, and B exists alone. Among them, A and B can be singular or plural. The character "/" generally indicates that the contextual objects have an "or" relationship.

In the present application, "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural.

It should be understood that in various embodiments of the present application, the sequence numbers of the above processes do not mean the order of execution, and some or all steps may be executed in parallel or sequentially, and the execution order of each process shall be determined based on its functions and internal logic and should not constitute any limitation to the implementation process of the embodiments of the present application.

Terms used in the embodiments of the present application are only for the purpose of describing specific embodiments, and are not intended to limit the present application. The singular forms "a", "said" and "the" used in the embodiments of the present application and the appended claims are also intended to include plural forms unless otherwise clearly indicated in the context.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be $\mu g$, mg, g, kg and other well-known mass units in the chemical industry.

The terms "first" and "second" are adopted for descriptive purposes only to distinguish different substances and are not to be construed as indicating or implying a relative importance or implicitly indicating the number of technical features indicated. For example, without departing from the scope of the embodiments of the present application, the first XX can also be referred to as the second XX, and similarly, the second XX can also be referred to as the first XX. Thus, features prefixed by "first" and "second" will explicitly or implicitly represent that one or more of the referred technical features are included.

A first aspect of embodiments of the present application provides a cathode lithium-supplementing additive. The cathode lithium-supplementing additive comprises: a lithium-containing material, and a doped phase existing in a bulk phase of the lithium-containing material. A water absorption rate of the cathode lithium-supplementing additive is 0 ppm/s to 50 ppm/s.

The cathode lithium-supplementing additive provided in the first aspect of the embodiments of the present application comprises the lithium-containing material and the doped phase existing in the bulk phase of the lithium-containing material. After the lithium-containing material containing the doped phase is prepared, the water absorption rate is tested, and the lithium-containing material containing the doped phase having the water absorption rate of 0 ppm/s to 50 ppm/s is selected as the cathode lithium-supplementing additive, ensuring that the obtained cathode lithium-supplementing additive has good moisture resistance and good doping effect of the doped phase, so that the obtained battery has excellent properties and the entire battery will not be scrapped.

In some embodiments, the water absorption rate of the cathode lithium-supplementing additive is 0 ppm/s to 50 ppm/s. If the water absorption rate of the cathode lithium-supplementing additive is higher, it means that during the battery processing process, the sample is easy to deteriorate and cannot play the capacity normally.

In some specific embodiments, the water absorption rate of the cathode lithium-supplementing additive includes but is not limited to 0ppm/s, 5ppm/s, 10ppm/s, 15ppm/s, 20ppm/s, 25ppm/s, 30ppm/s, 35ppm/s, 40ppm/s, 45ppm/s, and 50ppm/s.

In some embodiments, the cathode lithium-supplementing additive comprises: a lithium-containing material, and a doped phase existing in a bulk phase of the lithium-containing material.

In some embodiments, the lithium-containing material comprises at least one of $Li_xM_yO_z$ and $Li_wA$; in which, $0<x\leq8$, $0<y\leq3$, $0<z<6$, $0<w\leq5$; M is at least one element of Fe, Co, Ni, Mn, Si, Sn, Cu, Mo, Al, and Ti; and A is at least one element of C, N, O, P, S, F, B, and Se.

In some embodiments, in the cathode lithium-supplementing additive, a doping element in the doped phase comprises at least one element of Al, Zr, Si, C, Co, Ni, Ti, Mn, and Cu. By doping with doping elements, the activity of the material can be reduced, thereby alleviating its stability in the air. In addition, a certain amount of $Ni^{2+}$ is doped. $Ni^{2+}$ is relatively stable at room temperature, during the recharging process, with the increase of valence state, $Ni^{2+}$ is changed to $Ni^{3+}$, which has a high catalytic activity, thereby being conducive to the release of Li.

In some embodiments, a content of the doping element in the doped phase accounts for 1% to 10% of the cathode lithium-supplementing additive. If the doping element content is too high, a capacity per gram of the material will be reduced, the charging voltage platform will be increased, and the constant current charging ratio will be reduced. If the doping content is too low, the stabilizing effect of the doping on the material will be weakened, so that it is unable to obtain the cathode lithium-supplementing additive having the required water absorption rate, which can be 1 %, 3 wt%, 5 wt%, 6 wt%, 9 wt%, 10 wt%.

In some embodiments, in the cathode lithium-supplementing additive, a covalent bond containing the doping element exists inside the lithium-containing material, which can further provide a crystal structure of the cathode lithium-supplementing additive, thereby being conducive to obtaining a cathode lithium-supplementing additive having good water absorption.

A second aspect of embodiments of the present application provides a preparation method of a cathode lithium-supplementing additive, comprising the following steps:

S01, providing a lithium-containing material containing a doped phase;

S02, measuring a mass of the lithium-containing material containing the doped phase at different time points within 0 min to 60 min, and calculating a water absorption rate of the lithium-containing material containing the doped phase; and

S03, selecting the lithium-containing material containing the doped phase having a water absorption rate of 0 ppm/s to 50 ppm/s as the cathode lithium-supplementing additive.

The second aspect of the embodiments of the present application provides the preparation method of a cathode lithium-supplementing additive. In the preparation method, the mass of the provided lithium-containing material containing the doped phase at different time points within 0 min to 60 min is measured, the water absorption rate of the lithium-containing material containing the doped phase is calculated, and the lithium-containing material containing the doped phase having the water absorption rate of 0 ppm/s to 50 ppm/s is further selected as the cathode lithium-supplementing additive. In the preparation method, the water absorption rate of the cathode lithium-supplementing additive material can be measured for the lithium-containing material containing the doped phase without being assembled to form a battery, so as to determine the doping state of the doped phase, and ensure that the obtained cathode lithium-supplementing additive has good moisture resistance. After the cathode lithium-supplementing additive is assembled and packaged to form the battery, due that the bulk phase is doped by the doping element, the stability of the lithium-supplementing additive material in the outdoor environment atmosphere increases, which can ensure that the obtained battery has excellent properties, and the entire battery will not be scrapped, thereby improving the battery life.

In step S01, a lithium-containing material containing a doped phase is provided.

In some embodiments, the lithium-containing material comprises at least one of $Li_xM_yO_z$ and $Li_wA$; in which, $0<x\leq8$, $0<y\leq3$, $0<z<6$, $0<w\leq5$; M is at least one element of Fe, Co, Ni, Mn, Si, Sn, Cu, Mo, Al, and Ti; and A is at least one element of C, N, O, P, S, F, B, and Se.

In some embodiments, the preparation method of the lithium-containing material containing the doped phase comprises the following steps:

S011, providing a lithium-containing material;

S012, dispersing a material for the doped phase in an organic solvent to obtain a doped phase solution;

S013, using ball milling/stirring to uniformly mix the doped phase solution with the lithium-containing material, and then placing a resulting mixture in an inert atmosphere for sintering treatment to obtain the lithium-containing material containing the doped phase.

In some embodiments, the lithium-containing material containing the doped phase is placed in a glove box, and one sample is taken each time. After the test, another sample is taken from the glove box, so as to avoid inaccurate data due to contamination.

In step S02, in some embodiments, measuring the mass of the lithium-containing material containing the doped phase at different time points within 0 min to 60 min may be performed as follows: laying the lithium-containing material containing the doped phase flat on an analytical balance, recording the mass at different time points within 0 min to 60 min, and calculating the water absorption rate of the lithium-containing material containing the doped phase.

In some embodiments, the environmental conditions for measuring the lithium-containing material, that is, the placement conditions of the analytical balance are controlled to be as follows: a standard atmospheric pressure, a temperature of 25°C to 26°C, and a relative humidity controlled to be between 10% and 50%. Only by controlling the determination of water absorption under these conditions can the data be ensured to be correct.

In some embodiments, a variation range of the relative humidity is smaller than 5%..

In some embodiments, the relative humidity is selected from a range of 20% to 25% or a range of 30% to 35%.

In some embodiments, the analytical balance is selected from an analytical balance having an accuracy of one hundred thousandth.

In some embodiments, in the step of calculating the water absorption rate of the lithium-containing material containing the doped phase, the mass of the lithium-containing material containing the doped phase is 0.1 g to 1 g. In some specific embodiments, the mass of the lithium-containing material containing the doped phase is 0.17 g to 0.19 g. An appropriate amount of lithium-containing material containing the doped phase is provided for measurement, which is conducive to analyzing the water absorption rate of the material. In some specific embodiments, the mass of the lithium-containing material containing the doped phase includes but is not limited to 0.17 g, 0.175 g, 0.18 g, 0.185 g, and 0.19 g.

Further, the lithium-containing material containing the doped phase is laid flat on the analytical balance. The area over which the material is spread is as thin and uniform as possible to ensure that the test area does not affect the water absorption rate of the material.

In some embodiments, in the step of calculating the water absorption rate of the lithium-containing material containing the doped phase, the lithium-containing material containing the doped phase is loosely laid flat, and a laying thickness is 0.01 cm to 0.3 cm. In some specific embodiments, a laying thickness of the lithium-containing material containing the doped phase is 0.1 cm to 0.3 cm. It is ensured that the spread area is as thin and uniform as possible, so that the test area does not affect the water absorption rate of the material.

In some specific embodiments, the laying thickness of the lithium-containing material containing the doped phase includes but is not limited to 0.1 cm, 0.15 cm, 0.2 cm, 0.25 cm, and 0.3 cm.

Further, the mass at different time points within 0 min to 60 min is recorded, and the water absorption rate of the lithium-containing material containing the doped phase is calculated.

In some embodiments, the step of measuring the mass at different time points within 0 min to 60 min comprises: measuring the mass every 5 min within 0 min to 60 min.

In some embodiments, the mass at different time points within 0 min to 20 min is recorded, which comprises: recording the mass at 0 min, 5 min, 10 min, 15 min, and 20 min, and calculating the water absorption rate of the lithium-containing material containing the doped phase.

In some embodiments, in the step of calculating the water absorption rate of the lithium-containing material containing the doped phase, a calculation formula of the water absorption rate is:

$$V=(w_{t2}-w_{t1})/w_0*(t2-t1)$$

in which, $w_0$ is a mass of a sample added, $w_{t1}$ is a mass of the sample after a placement time t1, $w_{t2}$ is a mass of the sample after a placement time t2, and t1 and t2 are placement times.

In some embodiments, t1 and t2 need to be greater than 600 seconds.

A third aspect of embodiments of the present application provides a cathode plate. The cathode plate comprises: a cathode current collector, and a cathode active material layer arranged on the cathode current collector. The cathode active material layer comprises: a cathode active material, a binder, a conductive agent, and a cathode lithium-supplementing additive. The cathode lithium-supplementing additive is selected from a cathode lithium-supplementing additive or prepared by a preparation method of a cathode lithium-supplementing additive.

The cathode plate provided in the third aspect of the embodiments of the present application comprises the cathode current collector and the cathode active material layer located on the cathode current collector. The cathode active material layer comprises the cathode lithium-supplementing additive. Based on the provided cathode lithium-supplementing additive having the water absorption rate limited to 0 ppm/s to 50 ppm/s, the cathode plate has good moisture resistance, can isolate harmful components such as water and carbon dioxide in the air and has a certain conductivity. After being assembled to form the battery, the cathode plate can achieve the effect of lithium-supplementing for the cathode of the battery, improve the service life of the battery, maintain the abundance of lithium ions in the battery system, improve the initial Columbic efficiency and overall electrochemical performance of the battery, and achieve efficient lithium-supplementing.

In some embodiments, mass percentage of the lithium-supplementing additive in the cathode active layer is 0.5 wt% to 20 wt%.

In some specific embodiments, the mass percentage of the lithium-supplementing additive in the cathode active layer includes but is not limited to 0.5 wt%, 1.0 wt%, 1.5 wt%, 2.0 wt%, 2.5 wt%, 3.0 wt%, 3.5 wt%, 4.0 wt%, 4.5 wt%, 5.0 wt%, 5.5 wt%, 6.0 wt%, 6.5 wt%, 7.0 wt%, 7.5 wt%, 8.0 wt%, 8.5 wt%, 9.0 wt%, 9.5 wt%, 10.0 wt%, 10.5 wt%, 11 wt%, 11.5 wt%, 12 wt%, 12.5 wt%, 13 wt%, 13.5 wt%, 14 wt%, 14.5 wt%, 15 wt%, 15.5 wt%, 16 wt%, 16.5 wt%, 17 wt%, 17.5 wt%, 18 wt%, 18.5 wt%, 19 wt%, 19.5 wt%, and 20 wt%.

In some embodiments, a mass percentage of the conductive agent in the cathode active layer is 0.5 wt% to 15 wt%.

In some specific embodiments, the mass percentage of the conductive agent in the cathode active layer includes but is not limited to 0.5 wt%, 1.0 wt%, 1.5 wt%, 2.0 wt%, 2.5 wt%, 3.0 wt%, 3.5 wt%, 4.0 wt%, 4.5 wt%, 5.0 wt%, 5.5 wt%, 6.0 wt%, 6.5 wt%, 7.0 wt%, 7.5 wt%, 8.0 wt%, 8.5 wt%, 9.0 wt%, 9.5 wt%, 10.0 wt%, 10.5 wt%, 11 wt%, 11.5 wt%, 12 wt%, 12.5 wt%, 13 wt%, 13.5 wt%, 14 wt%, 14.5 wt%, and 15 wt%.

In some embodiments, a mass percentage of the binder in the cathode active layer is 0.5 wt%-15 wt%.

In some specific embodiments, the mass percentage of the binder in the cathode active layer includes but is not limited to 0.5 wt%, 1.0 wt%, 1.5 wt%, 2.0 wt%, 2.5 wt%, 3.0 wt%, 3.5 wt%, 4.0 wt%, 4.5 wt%, 5.0 wt%, 5.5 wt%, 6.0 wt%, 6.5 wt%, 7.0 wt%, 7.5 wt%, 8.0 wt%, 8.5 wt%, 9.0 wt%, 9.5 wt%, 10.0 wt%, 10.5 wt%, 11 wt%, 11.5 wt%, 12 wt%, 12.5 wt%, 13 wt%, 13.5 wt%, 14 wt%, 14.5 wt%, and 15 wt%.

A fourth aspect of embodiments of the present application provides a secondary battery. The secondary battery comprises a cathode plate.

The fourth aspect of the embodiments of the present application provides the secondary battery. The secondary battery comprises the provided cathode plate, and the cathode plate comprises a cathode lithium-supplementing additive prepared by the preparation method of the cathode lithium-supplementing additive, ensuring that before packaging to form the secondary battery, the cathode lithium-supplementing additive in the cathode plate has good moisture resistance and is not affected by water vapor and carbon dioxide in the air, so that the lithium ions in the assembled secondary battery system are stable, the overall electrochemical performance of the battery is improved, making the battery have good cycle performance and lithium-supplementing performance, which is conducive to widespread use.

The following is an explanation in conjunction with specific examples.

**Example A1**

**Cathode lithium-supplementing additive and preparation method thereof**

The preparation method was performed by the following steps:

(1) A lithium-containing material containing a doped phase was provided, in which, a doping element in the doped phase was Al and Ni, and the lithium-containing material was $Li_5FeO_4$.

① a lithium-supplementing material $Li_5FeO_4$ was firstly prepared. Specifically, certain masses of lithium oxide and iron oxide were collected according to a ratio of Li:Fe=5.1:1, then fully mixed. A resulting mixture was sintered at a temperature 350°C in an argon atmosphere for 5 hrs, then heated to 750°C and sintered at such temperature for 7 hrs, after that, the tube furnace was cooled naturally to a room temperature, a resulting product was taken out and crushed to obtain the lithium-supplementing material $Li_5FeO_4$;

② According to the mass of the lithium-supplementing material $Li_5FeO_4$ prepared in ①, 8% aluminum nitrate and 2% nickel nitrate were collected and placed in anhydrous ethanol. An addition amount of anhydrous ethanol was sufficient to evenly disperse aluminum nitrate and nickel nitrate. Ultrasonic dispersion was performed for 3 hrs to obtain a uniform solution. The obtained uniform solution played a key role in the subsequent process of doping the lithium-supplementing material;

③ A mixed solution prepared in ② was evenly mixed with the lithium-supplementing material $Li_5FeO_4$ prepared in ① by ball milling/stirring, thereby further ensuring that Al and Ni can be evenly doped in the lithium-supplementing material during the subsequent sintering process to reduce the water absorption rate of the lithium-supplementing material in the air. The uniformly mixed solution/lithium-supplementing material $Li_5FeO_4$ was placed in a tubular furnace, to which argon was introduced, and heated to a temperature of 600°C at a heating rate of 2°C/min to 5°C/min and then sintered for 5 hrs to obtain a Ni/Al-doped $Li_5FeO_4$ composite lithium-supplementing material; and

④ The presence of the doped phase on the surface of the doped lithium-supplementing material was confirmed. Specifically, in EDS characterization, Al and Ni can be seen doped in the $Li_5FeO_4$ lithium-supplementing material, indicating that the use of the above doping process can make 8% Al and 2% Ni uniformly doped in the lithium-supplementing material.

(2) The lithium-containing material containing the doped phase was laid flat on an analytical balance, a mass at different time points from 0 min to 60 min was recorded, and a water absorption rate of the lithium-containing material containing the doped phase was calculated.

① Under standard atmospheric pressure, a room temperature was controlled at 25°C and the relative humidity was controlled at 20% to 25%;

② 0.3 g to 0.5 g of a sample was taken out from a glove box, one sample was taken for each time, and after the test, a next sample was taken from the glove box;

③ a weighing bottle was placed in an analytical balance having an accuracy of one hundred thousandth, a hatch was closed, and data was reset to zero; and

④ 0.17 g to 0.19 g of the sample to be tested was collected and placed in a container, and the material was spread by a spoon to make a spread area as thin and uniform as possible to ensure that a test area does not affect the water absorption rate of the material, then the hatch was closed, a timer was turned on after stabilizing for 3 s to 5 s, and a mass weighted by the analytical balance was recorded as a value at 0 min. Next, the values at 5 min, 10 min, 15 min, and 20 min were recorded, respectively. An average absorption data at 10 min to 20 min were calculated, and the water absorption rates of the lithium-containing material containing the doped phase were calculated.

(3) The lithium-containing material containing the doped phase having a water absorption rate of 0 ppm/s to 50 ppm/s was selected as the cathode lithium-supplementing additive.

**Example A2**

**Cathode lithium-supplementing additive and preparation method thereof**

The preparation method was performed by the following steps:

(1) A lithium-containing material containing a doped phase was provided, in which, a doping element in the doped phase was Si, and the lithium-containing material was $Li_5FeO_4$.

① a lithium-supplementing material $Li_5FeO_4$ was firstly prepared. Specifically, certain masses of lithium oxide and iron oxide were collected according to a ratio of Li:Fe=5.1:1, then fully mixed. A resulting mixture was sintered at a temperature 350°C in an argon atmosphere for 5 hrs, then heated to 750°C and sintered at such temperature for 7 hrs, after that, the tube furnace was cooled naturally to a room temperature, a resulting product was taken out and crushed to obtain the lithium-supplementing material $Li_5FeO_4$;

② According to the mass of the lithium-supplementing material $Li_5FeO_4$ prepared in ①, 2% nano-silica was collected and placed in anhydrous ethanol. An addition amount of anhydrous ethanol was sufficient to evenly disperse nano-silica. Ultrasonic dispersion was performed for 5 hrs to obtain a uniform suspension. The obtained uniform suspension played a key role in the subsequent process of doping the lithium-supplementing material;

③ A mixed solution prepared in ② was evenly mixed with the lithium-supplementing material $Li_5FeO_4$ prepared in ① by ball milling/stirring, thereby further ensuring that Si can be evenly doped in the lithium-supplementing material during the subsequent sintering process to reduce the water absorption rate of the lithium-supplementing material in the air. The uniformly mixed solution/lithium-supplementing material $Li_5FeO_4$ was placed in a tubular furnace, to which argon was introduced, and heated to a temperature of 750°C at a heating rate of 3°C/min and then sintered for 6 hrs to obtain a Si-doped $Li_5FeO_4$ composite lithium-supplementing material; and

④ The presence of the doped phase on the surface of the doped lithium-supplementing material was confirmed. Specifically, in EDS characterization, Si can be seen evenly doped in the $Li_5FeO_4$ lithium-supplementing material. After ICP testing, the Si content was 1.99%, indicating that the use of the above doping process can make 2% doping element Si uniformly doped in the lithium-supplementing material;

(2) The lithium-containing material containing the doped phase was laid flat on an analytical balance, a mass at different time points from 0 min to 60 min was recorded, and a water absorption rate of the lithium-containing material containing the doped phase was calculated.

① Under standard atmospheric pressure, a room temperature was controlled at 25°C and the relative humidity was controlled at 20% to 25%;

② 0.3 g to 0.5 g of a sample was taken out from a glove box, one sample was taken for each time, and after the test, a next sample was taken from the glove box;

③ a weighing bottle was placed in an analytical balance having an accuracy of one hundred thousandth, a hatch was closed, and data was reset to zero; and

④ 0.17 g to 0.19 g of the sample to be tested was collected and placed in a container, and the material was spread by a spoon to make a spread area as thin and uniform as possible to ensure that a test area does not affect the water absorption rate of the material, then the hatch was closed, a timer was turned on after stabilizing for 3 s to 5 s, and a mass weighted by the analytical balance was recorded as a value at 0 min. Next, the values at 5 min, 10 min, 15 min, and 20 min were recorded, respectively. An average absorption data at 10 min to 20 min were calculated, and the water absorption rates of the lithium-containing material containing the doped phase were calculated.

(3) The lithium-containing material containing the doped phase having a water absorption rate of 0 ppm/s to 50 ppm/s was selected as the cathode lithium-supplementing additive.

**Example A3**

**Cathode lithium-supplementing additive and preparation method thereof**

The preparation method was performed by the following steps:

(1) A lithium-containing material containing a doped phase was provided, in which, a doping element in the doped phase was Zr and Mn, and the lithium-containing material was $Li_5FeO_4$.

① a lithium-supplementing material $Li_5FeO_4$ was firstly prepared. Specifically, certain masses of lithium oxide and iron oxide were collected according to a ratio of Li:Fe=5.1:1, then fully mixed. A resulting mixture was sintered at a temperature 350°C in an argon atmosphere for 5 hrs, then heated to 750°C and sintered at such temperature for 7 hrs, after that, the tube furnace was cooled naturally to a room temperature, a resulting product was taken out and crushed to obtain the lithium-supplementing material $Li_5FeO_4$;

② According to the mass of the lithium-supplementing material $Li_5FeO_4$ prepared in ①, 5% zirconium hydroxide and 1% manganese monoxide were collected and placed in anhydrous ethanol. An addition amount of anhydrous ethanol was sufficient to evenly disperse the additive. Ultrasonic dispersion was performed for 5 hrs to obtain a uniform solution. The obtained uniform solution played a key role in the subsequent process of doping the lithium-supplementing material;

③ A mixed solution prepared in ② was evenly mixed with the lithium-supplementing material $Li_5FeO_4$ prepared in ① by ball milling/stirring, thereby further ensuring that Zr and Mn can be evenly doped in the lithium-supplementing material during the subsequent sintering process to reduce the water absorption rate of the lithium-supplementing material in the air. The uniformly mixed suspension/lithium-supplementing material $Li_5FeO_4$ was placed in a tubular furnace, to which argon was introduced, and heated to a temperature of 100°C at a heating rate of 2°C/min and then sintered for 2 hrs to obtain a Zr/Mn-doped $Li_5FeO_4$ composite lithium-supplementing material; and

④ The presence of the doped phase on the surface of the doped lithium-supplementing material was confirmed. Specifically, in EDS characterization, Zr and Mn can be seen evenly doped in the $Li_5FeO_4$ lithium-supplementing material. After ICP testing, the Zr content was 5%, and the Mn content was 1%, indicating that the use of the above doping process can make Zr and Mn uniformly doped on a surface of the lithium-supplementing material.

(2) The lithium-containing material containing the doped phase was laid flat on an analytical balance, a mass at different time points from 0 min to 60 min was recorded, and a water absorption rate of the lithium-containing material containing the doped phase was calculated.

① Under standard atmospheric pressure, a room temperature was controlled at 25°C and the relative humidity was controlled at 20% to 25%;

② 0.3 g to 0.5 g of a sample was taken out from a glove box, one sample was taken for each time, and after the test, a next sample was taken from the glove box;

③ a weighing bottle was placed in an analytical balance having an accuracy of one hundred thousandth, a hatch was closed, and data was reset to zero; and

④ 0.17 g to 0.19 g of the sample to be tested was collected and placed in a container, and the material was spread by a spoon to make a spread area as thin and uniform as possible to ensure that a test area does not affect the water absorption rate of the material, then the hatch was closed, a timer was turned on after stabilizing for 3 s to 5 s, and a mass weighted by the analytical balance was recorded as a value at 0 min. Next, the values at 5 min, 10 min, 15 min, and 20 min were recorded, respectively. An average absorption data at 10 min to 20 min were calculated, and the water absorption rates of the lithium-containing material containing the doped phase were calculated.

(3) The lithium-containing material containing the doped phase having a water absorption rate of 0 ppm/s to 50 ppm/s was selected as the cathode lithium-supplementing additive.

**Comparative Example A1**

The comparative example provides a lithium-supplementing material, which is different from Examples 1-3, that is, a lithium-supplementing material which is not doped.

**Example B1-Example B3**

**Cathode**

Each lithium-supplementing material provided in the above-mentioned Examples A1 to A3 was mixed with polyvinylidene fluoride and SP in a mass ratio of 80:12:8 and ball-milled to obtain a lithium-supplementing slurry. The lithium-supplementing slurry was coated on a surface of an aluminum foil, which was then rolled, and vacuum dried overnight at 110°C, such that cathode plates of Examples B1 to B3 were obtained.

**Comparative Example B1**

**Cathode**

The lithium-supplementing material provided in the above Comparative Example A1 was mixed with polyvinylidene fluoride and SP in a mass ratio of 80:12:8 and ball-milled to obtain a lithium-supplementing slurry. The lithium-supplementing slurry was coated on a surface of an aluminum foil, which was then rolled, and vacuum dried overnight at 110°C, such that cathode plate of Example B1 was obtained.

**Example C1-Example C3**

**Lithium-ion battery**

Assemblage of lithium-ion battery: the lithium-ion battery was assembled in an inert atmosphere glove box in an assembly order of lithium metal plate-separator-electrolyte-cathode plate.

Cathode: the cathode plate provided in Example B1 to Example B3 respectively;

Anode: lithium metal plate;

Electrolyte: ethylene carbonate and ethyl methyl carbonate were mixed in a volume ratio of 3:7, and $LiPF_6$ was added to form an electrolyte, in which, the concentration of $LiPF_6$ was 1 mol/L.

Separator: polypropylene microporous separator.

**Comparative Example C1**

**Lithium-ion battery**

Assemblage of lithium-ion battery: the lithium-ion battery was assembled in an inert atmosphere glove box in an assembly order of lithium metal plate-separator-electrolyte-cathode plate.

Cathode: the cathode plate provided in Comparative Example B1;

Anode: lithium metal plate;

Electrolyte: ethylene carbonate and ethyl methyl carbonate were mixed in a volume ratio of 3:7, and $LiPF_6$ was added to form an electrolyte, in which, the concentration of $LiPF_6$ was 1 mol/L.

Separator: polypropylene microporous separator.

**Property test**

(I) The water absorption rates of the cathode lithium-supplementing additives of Example A1 to Example A3 and Comparative Example B1 were analyzed.

(II) The cathode plates of Example B1 to Example B3 and Comparative Example B1 were placed in an environment having a humidity of 25%, specific capacities of the corresponding plates at 0 hr to 24 hrs were tested, and mass gain rates of the cathode plates after water absorption in 24 hrs were recorded, and a state of the cathode slurry in each example was observed and recorded.

(III) Button cells obtained from Example C1 to Example C3 and Comparative Example C3 were respectively charged to 4.3 V at a rate of 0.05 C with a constant current and a constant voltage, with a cut-off current of 0.01 C, and left for 5 min, then discharged at a rate of 0.05 C to 3.0 V, then relevant performance tests of lithium-ion batteries were performed.

**Result Analysis**

(I)The water absorption rates of the cathode lithium-supplementing additives of Examples A1 to A3 and Comparative Example B1 were analyzed. As shown in Table 1, it can be seen that in the preparation method of the cathode lithium-supplementing additive provided by the present application, the prepared lithium-containing material containing the doped phase was laid flat on the analytical balance, the mass at different time points within 0 min to 60 min was recorded, the water absorption rate of the lithium-containing material containing the doped phase was calculated, and the lithium-containing materials containing the doped phase with water absorption rates of 1 ppm/s to 15 ppm/s, 1 ppm/s to 20 ppm/s, and 1 ppm/s to 10 ppm/s were further selected as the cathode lithium-supplementing additive. While the water absorption rate of the lithium-containing material provided in the comparative example was 55 ppm/s to 65 ppm/s.

Table 1

| Sample | Doping treatment on bulk phase | Water absorption rate Ppm/s | Relative humidity % |
|---|---|---|---|
| Example A1 | Doping elements Al, Ni | 1-15 | 25 |
| Example A2 | Doping elements Si | 1-20 | 25 |
| Example A3 | Doping elements Zr, Mn | 1-10 | 25 |
| Comparative Example A1 | Comparative group, without any treatment | 55-65 | 25 |

(II) The cathode plates of Example B1 to Example B3 and Comparative Example B1 were placed in an environment having a humidity of 25%, and the specific capacity of the corresponding plates was tested at a time of 0 hr to 24 hrs, and the mass gain rate of the cathode plate after water absorption in 24 hrs was recorded. Moreover, the state of the cathode slurry in each example was observed and recorded. As shown in Table 2, the cathode plates obtained in Example B1 to Example B3 were uniformly doped, the cathode slurry state was a normal mixture, and the mass gain rate of the cathode plate in 24 hrs was 0.2%, 0.24%, and 0.1%, respectively; while in the cathode plate provided by Comparative Example B 1, the cathode slurry state was jelly-like, and the mass gain rate of the cathode plate in 24 hrs was 20%. It can be seen that the plate obtained in the comparative example absorbs a lot of water, which is not conducive to assembly into batteries.

Table 2

| Sample | Water absorption rate | Doping uniformity | Cathode slurry state | Mass gain rate % of cathode plate in 24 hrs |
|---|---|---|---|---|
| Example B1 | 1-15 | Uniform | Normal | 0.2% |
| Example B2 | 1-20 | Uniform | Normal | 0.24 % |
| Example B3 | 1-10 | Uniform | Normal | 0.1% |
| Comparativ e Example B1 | 55-65 | / | Jelly | 20% |

(III) The button cells obtained in Examples C1 to C3 and Comparative Example C3 were charged to 4.3 V at a rate of 0.05 C with a constant current and constant voltage, with a cut-off current of 0.01 C, left for 5 min, and discharged to 3.0 V at a rate of 0.05 C. The relevant performance tests of the lithium-ion batteries were measured as shown in Table 3. It can be seen that the initial charge specific capacities of the batteries obtained in Examples C1 to C3 at 0 hr were 640 mAh/g, 630 mAh/g, and 645 mAh/g, respectively; the initial charge specific capacities at 24 hrs were 637 mAh/g, 622 mAh/g, and 641 mAh/g, respectively; while the initial charge specific capacity of the battery obtained in Comparative Example C1 was 252 mAh/g at 0 hr, and 113 mAh/g at 24 hrs. It can be seen that the secondary battery provided in the present application comprises the provided cathode plate, and the cathode plate comprises a cathode lithium-supplementing additive prepared by the preparation method of the cathode lithium-supplementing additive, ensuring that before packaging to form the secondary battery, the cathode lithium-supplementing additive in the cathode plate has good moisture resistance and is not affected by water vapor and carbon dioxide in the air, so that the lithium ions in the assembled secondary battery system are stable, the overall electrochemical performance of the battery is improved, making the battery have good cycle performance and lithium-supplementing performance, which is conducive to widespread use.

Table 3

| Sample | Initial charge specific capacity (mAh/g) at 0 hr | Initial charge specific capacity (mAh/g) at 24 hrs |
|---|---|---|
| Example C1 | 640 | 637 |
| Example C2 | 630 | 622 |
| Example C3 | 645 | 641 |

(continued)

| Sample | Initial charge specific capacity (mAh/g) at 0 hr | Initial charge specific capacity (mAh/g) at 24 hrs |
|---|---|---|
| Comparative Example C1 | 252 | 113 |

In summary, the cathode lithium-supplementing additive provided comprises the lithium-containing material and the doped phase existing in the bulk phase of the lithium-containing material. After the lithium-containing material containing the doped phase is prepared, the water absorption rate is tested, and the lithium-containing material containing the doped phase having the water absorption rate of 0 ppm/s to 50 ppm/s is selected as the cathode lithium-supplementing additive, ensuring that the obtained cathode lithium-supplementing additive has good moisture resistance and good doping effect of the doped phase, so that the obtained battery has excellent properties and the entire battery will not be scrapped.

The above description is only preferred embodiments of the present application and is not intended to limit the present application. For those skilled in the art, the present application can have various modifications and changes. Any modifications, equivalent substitutions, and improvements made within the spirit and principles of the present application should fall within the protection scope of the present application.

**Claims**

1. A cathode lithium-supplementing additive, **characterized by** that the cathode lithium-supplementing additive comprises: a lithium-containing material, and a doped phase existing in a bulk phase of the lithium-containing material, wherein a water absorption rate of the cathode lithium-supplementing additive is 0 ppm/s to 50 ppm/s.

2. The cathode lithium-supplementing additive according to claim 1, wherein a doping element in the doped phase comprises at least one element of Al, Zr, Si, C, Co, Ni, Ti, Mn, and Cu.

3. The cathode lithium-supplementing additive according to claim 2, wherein a covalent bond containing the doping element exists inside the lithium-containing material.

4. The cathode lithium-supplementing additive according to claim 2 or 3, wherein a content of the doping element in the doped phase accounts for 1% to 10% of the cathode lithium-supplementing additive.

5. The cathode lithium-supplementing additive according to any one of claims 1-4, wherein the lithium-containing material comprises at least one of $Li_xM_yO_z$ and $Li_wA$; wherein $0<x\leq8, 0<y\leq3, 0<z\leq6, 0<w\leq5$; M is at least one element of Fe, Co, Ni, Mn, Si, Sn, Cu, Mo, Al, and Ti; and A is at least one element of C, N, O, P, S, F, B, and Se.

6. A preparation method of a cathode lithium-supplementing additive, **characterized by** comprising the following steps:

   providing a lithium-containing material containing a doped phase;
   measuring a mass of the lithium-containing material containing the doped phase at different time points within 0 min to 60 min, and calculating a water absorption rate of the lithium-containing material containing the doped phase; and
   selecting the lithium-containing material containing the doped phase having a water absorption rate of 0 ppm/s to 50 ppm/s as the cathode lithium-supplementing additive.

7. The preparation method of the cathode lithium-supplementing additive according to claim 6, wherein in the step of calculating the water absorption rate of the lithium-containing material containing the doped phase, environmental conditions for measuring the lithium-containing material are controlled to be as follows: a standard atmospheric pressure, a temperature of 23°C to 27°C, and a relative humidity controlled to be between 10% and 50%.

8. The preparation method of the cathode lithium-supplementing additive according to claim 7, wherein a variation range of the relative humidity is smaller than 5%.

9. The preparation method of the cathode lithium-supplementing additive according to claim 7 or 8, wherein the relative humidity is selected from a range of 20% to 25% or a range of 30% to 35%.

10. The preparation method of the cathode lithium-supplementing additive according to any one of claims 6-9, wherein in the step of calculating the water absorption rate of the lithium-containing material containing the doped phase, the mass of the lithium-containing material containing the doped phase is 0.1 g to 1 g.

11. The preparation method of the cathode lithium-supplementing additive according to any one of claims 6-9, wherein in the step of calculating the water absorption rate of the lithium-containing material containing the doped phase, the lithium-containing material containing the doped phase is loosely laid flat, and a laying thickness is 0.01 cm to 0.3 cm.

12. The preparation method of the cathode lithium-supplementing additive according to any one of claims 6-9, wherein the step of measuring the mass at different time points within 0 min to 60 min comprises:
measuring the mass every 5 min within 0 min to 60 min.

13. The preparation method of the cathode lithium-supplementing additive according to any one of claims 6-9, wherein

in the step of calculating the water absorption rate of the lithium-containing material containing the doped phase, a calculation formula of the water absorption rate is:

$$V=(w_{t2}-w_{t1})/w_0*(t2-t1)$$

wherein, $w_0$ is a mass of a sample added, $w_{t1}$ is a mass of the sample after a placement time t1, $w_{t2}$ is a mass of the sample after a placement time t2, and t1 and t2 are placement times.

14. A cathode plate, **characterized by** comprising:

the cathode lithium-supplementing additive according to any one of claims 1-5, or
the cathode lithium-supplementing additive prepared by the preparation method according to any one of claims 6-13.

15. A secondary battery, **characterized in that** the secondary battery comprises the cathode plate according to claim 14.

# INTERNATIONAL SEARCH REPORT

| International application No. |
|---|
| **PCT/CN2023/106750** |

| **A. CLASSIFICATION OF SUBJECT MATTER** |
|---|
| H01M10/42(2006.01)i; H01M4/36(2006.01)i; H01M4/62(2006.01)i; H01M4/13(2010.01)i; H01M10/0525(2010.01)i |
| According to International Patent Classification (IPC) or to both national classification and IPC |

| **B. FIELDS SEARCHED** |
|---|
| Minimum documentation searched (classification system followed by classification symbols) |
| H01M |
| Documentation searched other than minimum documentation to the extent that such documents are included in the fields searched |
| |
| Electronic data base consulted during the international search (name of data base and, where practicable, search terms used) |
| DWPI; CNTXT; VCN; CNKI; ISI_Web of Science: 电池, 正极?片, 正极补锂, 添加剂, 补锂, 掺杂, 吸水?率, 耐湿, ppm?s, 烧结, anode sheet, battery, anode lithium supplement, lithium, dope?, water absorption |

| **C. DOCUMENTS CONSIDERED TO BE RELEVANT** | | |
|---|---|---|
| Category* | Citation of document, with indication, where appropriate, of the relevant passages | Relevant to claim No. |
| PX | CN 115347255 A (SHENZHEN DEFANGCHUANGYU NEW ENERGY TECHNOLOGY CO., LTD.) 15 November 2022 (2022-11-15)<br>entire document | 1-15 |
| X | CN 110459762 A (CENTRAL SOUTH UNIVERSITY) 15 November 2019 (2019-11-15)<br>description, paragraphs 2, 12-14, 27, and 56-57 | 1-15 |
| X | CN 110518298 A (CENTRAL SOUTH UNIVERSITY) 29 November 2019 (2019-11-29)<br>description, paragraphs 10-11, 25, and 51-52 | 1-15 |
| A | CN 114242939 A (HUIZHOU EVE ENERGY CO., LTD.) 25 March 2022 (2022-03-25)<br>entire document | 1-15 |
| A | WO 2022105259 A1 (HUAWEI TECHNOLOGIES CO., LTD.) 27 May 2022 (2022-05-27)<br>entire document | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 August 2023** | **15 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/106750** |

| Patent document cited in search report | | | Publication date (day/month/year) | Patent family member(s) | Publication date (day/month/year) |
|---|---|---|---|---|---|
| CN | 115347255 | A | 15 November 2022 | None | |
| CN | 110459762 | A | 15 November 2019 | None | |
| CN | 110518298 | A | 29 November 2019 | None | |
| CN | 114242939 | A | 25 March 2022 | None | |
| WO | 2022105259 | A1 | 27 May 2022 | None | |

Form PCT/ISA/210 (patent family annex) (July 2022)

**EP 4 557 445 A1**

**Patent documents cited in the description**

- CN 202210813802